# EUROPEAN PATENT APPLICATION

(11) **EP 2 081 373 A1**
(43) Date of publication of application: **22.07.2009**
(21) Application number: 08253179.9
(22) Date of filing: 30.09.2008
(51) Int. Cl.: H04N 5/04, H04N 7/54

(54) **Video/audio reproducing apparatus**

(30) Priority: 15.01.2008 JP 2008005167; 01.02.2008 JP 2008022265
(71) Applicant: Hitachi, Ltd., Tokyo 100-8280 (JP)
(72) Inventor: Kanemaru, Takashi, Tokyo 100-8220 (JP); Tsuruga, Sadao, Tokyo 100-8220 (JP)
(74) Representative: Calderbank, Thomas Roger

(57) **Abstract**

A video/audio reproducing apparatus, to be connected via a first apparatus with a second apparatus, comprises: a first receiving portion, which is configured to receive video data, audio data, and first reproduction synchronization information for reproduction synchronization between the video data and the audio data; a second receiving portion, which is configured to receive second reproduction synchronization information for reproduction synchronization between the video data and the audio data from the first apparatus; and a controlling portion, which is configured to reproduce the video data and the audio data received by the first receiving portion, upon basis of the first reproduction synchronization information and the second reproduction synchronization information, which are received by the first receiving portion and the second receiving portion.

## Description

The technical field of the present invention relates to an apparatus for reproducing video and/or audio.

In relation with the technical field mentioned above, within the following patent document 1 is described "to provide an audio/video transmitting apparatus for enabling to reduce the difference between the audio reproduced and the video reproduced, caused due to the fact that an audio signal and a video signal are transmitted, respectively, through different transmission devices, although reproduction timings of them should be fitted with each other", as a problem, and as a dissolving means thereof, "although from the audio/video transmission apparatus, the video signal is transmitted through radio from a video radio transmitting portion while the audio signal is transmitted with wire from an audio outputting portion, but in this case, an adjustment is made by delaying the audio signal, by means of an audio delaying portion provided in the audio/video transmitting apparatus, i.e., the phase difference between the audio signal and the video signal, which are transmitted, comes to be so small that it cannot be detected by a viewer who is looking and listening the audio and the video, which are reproduced from those signals".

[Patent Document 1] Japanese Patent Laying-Open No. 2004-88442 (2004).

For example, within digital broadcasting adopting a MPEG2 transport stream therein, etc., the time-stamp information is embedded or buried, for coding and packet-multiplexing the video and the audio, separately, thereby transmitting, and for synchronizing between the video and the audio (i.e., lip-sync) on a receiver side. On the receiver, a decoding processor portion obtains the synchronization by looking up this information. In recent years, accompanying with spreading of thin or slim-type television apparatuses, various kind of processes are conducted for obtaining video high quality, and as a result thereof, the time-period necessary for displaying the video extends much more. Then, for the purpose of delaying the video signal fitting to the delay time, which is necessary for reproducing the video, an adjustment is made upon an output timing of the audio with using a memory portion, etc.

In the Patent Document 1, it is intended to dissolve the shift of synchronization, i.e., the delay of video, which is caused due to the difference between the devices for transmitting the video and the audio, also by delaying the audio with using the memory portion. An amount of this delay is determined, uniformly, by a setup value, which may be set by a user or a transmission rate when transmitting the video.

However, there are sometimes cases where it is difficult for the user of the audio/video transmission system to achieve the adjustment from a beginning, in particular, so as to obtain the synchronization for the video and the audio, which are shifted greatly. Also, the delay amount cannot be always determined uniformly depending upon the transmission rate. This is because, although the delay of video is generated as the result of conduction of any kind of video processing, however the transmission rate of video is not one-to one corresponding to a method of the video processing.

Then, according to the present invention, a preferred aim is to provide a system for enabling to obtain the synchronization, easily, for synchronizing shift between the video and the audio, which is caused due to various factors, and thereby obtaining an improvement of usability thereof.

In more details, for example, according to the present invention, within a video/audio reproducing system, to which is connected a display output apparatus, for displaying/outputting video data and audio data to an output of a receiving apparatus, for receiving digital contents including, at least, the video data and the audio data, and first reproduction synchronizing information for establishing reproduction synchronization between the video data and the audio data, and for establishing the reproduction synchronization between the video data and the audio data of the digital contents, thereby outputting them, the display output apparatus transmits second reproduction synchronization information for establishing the reproduction synchronization between the video data and the audio data, which are outputted from the display output apparatus mentioned above, to the receiving apparatus, and the receiving apparatus establishes the reproduction synchronization between the video data and the audio data of the digital contents, which are outputted from the display output apparatus, in accordance with the first reproduction synchronization information and the second reproduction synchronization information that is received from the display output apparatus.

With such the means mentioned above, it is possible to achieve the synchronization between outputs of the video and the audio, easily.

Those and other objects, features and advantages of the present invention will become more readily apparent from the following detailed description when taken in conjunction with the accompanying drawings wherein:
Fig. 1 is a system view for showing examples of an input and an output of a receiving apparatus 3;
Fig. 2 is a view for showing an example of connection between the receiving apparatus 3 and a display apparatus 4;
Fig. 3 is a block diagram for showing an example of structures of the receiving apparatus 3;
Figs. 4(a) and 4(b) are block diagrams, each for showing an example of structures of the display apparatus 4;
Fig. 5 is a block diagram for showing an example of structures of a wired signal transmitter portion 311;
Fig. 6 is a block diagram for showing an example of structures of a wired signal receiver portion 312;
Fig. 7 is a block diagram for showing an example of structures of a radio or wireless signal transmitter portion 312;
Fig. 8 is a block diagram for showing an example of structures of a radio or wireless transmitter unit 9;
Fig. 9 is a block diagram for showing an example of structures of a radio or wireless transmitter unit 10;
Fig. 10 is a block diagram for showing an example of structures of a radio or wireless signal receiver portion 404;
Fig. 11 is a block diagram for showing an example of structures of an audio signal processor portion 206;
Fig. 12 is a flowchart for showing an example of delay time setup process when processing an initialization;
Fig. 13 is a flowchart for showing an example of process when changing the delay time;
Fig. 14 is a flowchart for showing an example of detailed processes for delay setups S1207 and S1302;
Fig. 15 is a flowchart for showing an example of detailed process for delay buffer setup S1401;
Fig. 16 is a flowchart for showing an example of detailed process for PTS offset setup S1402;
Fig. 17 is a flowchart for showing an example of detailed process for audio output setup S1403;
Fig. 18 is a flowchart for showing an example of process for changing a connection method between the receiving apparatus 3 and the display apparatus 4 from a wireless transmission;
Fig. 19 is a flowchart for showing an example of process for changing a connection method between the receiving apparatus 3 and the display apparatus 4 into the wireless transmission;
Fig. 20 is a view for showing an example of a setup menu display;
Fig. 21 is a view for showing an example of a setup menu display;
Figs. 22 (a) and 22 (b) are views, each for showing an example of a setup menu display;
Fig. 23 is a view for showing an example of a setup menu display;
Fig. 24 is a view for showing an example of a setup menu display;
Fig. 25 is a view for showing an example of message display when no connection is made between the receiving apparatus 3 and the display apparatus 4;
Fig. 26 is a view for showing an example of connection between the receiving apparatus 3 and a video display apparatus 14; and
Fig. 27 is a view for showing an example of connection between the receiving apparatus 3 and the display apparatus 4.

Hereinafter, embodiments according to the present invention will be fully explained by referring to the attached drawings.

Hereinafter, explanation will be made on a preferable embodiment of the present invention. However, the present invention should not be restricted to the present embodiment.

### <Embodiment 1>

### <Explanation of structures>

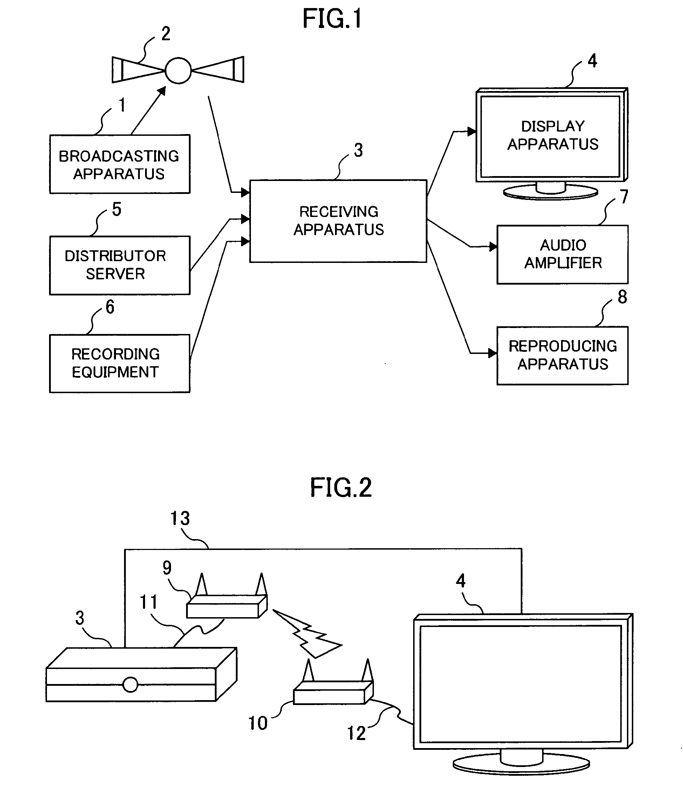

First of all, the structural examples of a receiving apparatus and peripheral equipments thereof will be explained by referring to Figs. 1 to 11.

Fig. 1 is a view for showing an example of data input/output of the receiving apparatus. A reference numeral 1 depicts a broadcasting station. A reference numeral 2 depicts a broadcasting satellite. There is the receiving apparatus 3 for receiving a signal transmitted from the broadcasting satellite, and it conducts processes, such as, expanding data compressed, etc., thereby to output to a display apparatus 4. Other than broadcast waves, various modes can be considered as the input, i.e., it is possible to receive a signal, which the broadcasting station transmits through a terrestrial wave. Or, there can be considered the followings, such as, receiving from a distribution server 5, which transmits data through a network, such as, Internet, etc., or receiving from a video recording equipment, which is connected through a local network (or, a home network), or a transmission method for enabling high-speed data transmission, such as, HDMI (High-Definition Multimedia Interface), etc. As destination of output from the receiving apparatus 3, various kinds can be considered other than the display apparatus 4. For example, only the audio data is outputted to an external audio amplifier 7, or data is outputted to a reproduction apparatus 8, which is connected with the local network or a cable for enabling the high-speed data transmission, such as, HDMI, etc. As a transmission method for outputting, it is possible to apply, such as, the above-mentioned HDMI connection, for example, or a protocol for conducting control between equipments connected with (hereinafter, described "CEC (Consumer Electronics Control).

Fig. 2 shows an example of data transmission between the receiving apparatus 3 and the display apparatus 4. Roughly classifying, there are two, i.e., a wireless data transmission through radio and a wired data transmission through a wire.

With using the radio, the receiving apparatus 3 and the display apparatus 4 are connected with a wireless (or radio) data transmission unit 9 and a wireless (or radio) data transmission unit 10, respectively. Between each apparatus and each unit is connected a cable 11 or 12, and this cable is able to transmit video/audio data, such as, the HDMI cable, for example, and is also able to transmit an easy instruction or command code thereon. Between the data transmission unit 9 and the data transmission unit 10 is conducted transmission of data, which is compressed in an individual format depending on implementation of the wireless (or radio) data transmission unit, for example. The receiving data transmission unit 10 extends the signal compressed, and thereby transmitting it to the display apparatus. Delay is generated due to this transmission process, and the time of that delay depends on a kind of the data transmission unit (i.e., a compression format, and so on). However, the wireless data transmission unit may be built within the receiving apparatus 3 or the display apparatus 4, or may be connected with, but not through the cable.

On the other hand, when applying a wire, the receiving apparatus 3 and the display apparatus 4 are connected with, directly, with using a transmission cable 13. This cable is able to transmit the video/audio data, such as, the HDMI cable, for example, and is also able to transmit an easy instruction or command code thereon.

Under such the structures, the receiving apparatus 3 and the display apparatus 4 are able to recognize the connection through radio waves of wireless transmission units 9 and 10. When recognizing, a controller of the receiving apparatus 3 records that the connection is through the radio wave, on a volatile memory. Or, after starting, a user may determine which transmission method should be used (i.e., use the wireless transmission or use the wired transmission) on a menu display, for example.

However, in the explanation given hereinafter, though explanation will be made, mainly, on the case where the connection is HDMI among the receiving apparatus 3, the display apparatus 4 and the wireless transmission units 9 and 10, however, other communication method may be applied, as far as it enables to conduct control between the equipments connected with.

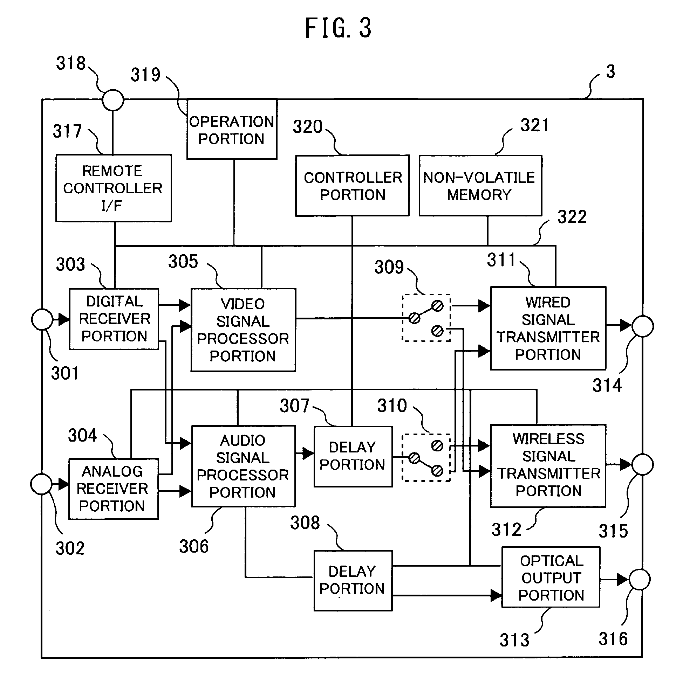

Fig. 3 shows an example of the inner structures of the receiving apparatus 3. Reference numerals 301 and 302 depict input terminals. They send out data to a digital receiver potion 303 and an analog receiver portion 304, respectively. The digital receiver potion 303 extracts only the data, which the user selects, from data inputted into a digital tuner, for example, when it is a broadcast wave, and video data is transmitted to a video signal processor portion 305 while audio data to an audio signal processor portion 306. The analog receiver portion 304 conducts a digital conversion process on the analog data received, and the video data is transmitted to the video signal processor portion 305 while the audio data to the audio signal processor portion 306. The video signal processor portion 305 decodes the digital data transmitted. The audio signal processor portion 306 decodes the audio digital data transmitted, and transmits a result of processing to a delay portion 307 and a delay portion 308.

The delay portion 307 includes a buffer for correcting or compensating a shift or difference in processing time between the video data and the audio data. No change is made, but the data is transmitted to a sender portion 311 or 312.

The delay portion 308, similar to the delay portion 307, includes a buffer for correcting or compensating the shift of delay time between the video data and the audio data. However, different from the delay portion 307, the delay portion 308 is a delay circuit, which is separately provided for use of an optical output, and it is effective when outputting the data of the optical output with the format after decoding thereof (i.e., PCM (Pulse Code Modulation) format).

Selection is made, to which one of the different transmitter portions the data should be transmitted, with using switches 309 and 310. Within the transmitter portion (also, being a receiver portion, and this is same hereinafter) 311 and the transmitter portion 312, the video data and the audio data are combined with each other, thereby to be transmitted to the display apparatus. An optical output portion 313 conducts an optical output of the audio data, for example, to an audio amplifier, etc. Reference numerals 314, 315 and 316 depict output terminals. A reference numeral 317 depicts a remote control I/F for a user to conduct operation through a remote controller. The data inputted from the input terminal 318 is transmitted to a controller portion 320. A reference numeral 319 depicts an operation portion (such as, a button, etc.) for enabling the user to conduct the operations of the receiving apparatus 3 and the display apparatus 4, but without the remote controller. The controller portion 320 conducts controlling on each of portions of the receiving apparatus 3 through a system bus 322. A non-volatile memory 321 reserves therein a setup value, which is determined by program data or the user.

Each portion may be constructed with hardware, or may be achieved with executing the program by a CPU, etc. (hereinafter, it is same).

Within the present embodiment, although the output is distributed between a wired signal processor portion 311 or a wireless signal processor portion 312, through the switches 309 and 310, in a method thereof, but for example, it is also possible to apply the structures for automatically determining on whether the wireless transmission units 9 is connected or the display apparatus 4 is connected at the end thereof, through communication, while assuming that the output I/F is the same and the transmitter portion is provided only one (1). Even in such case, the embodiment, which will be mentioned hereinafter, can be applied thereto.

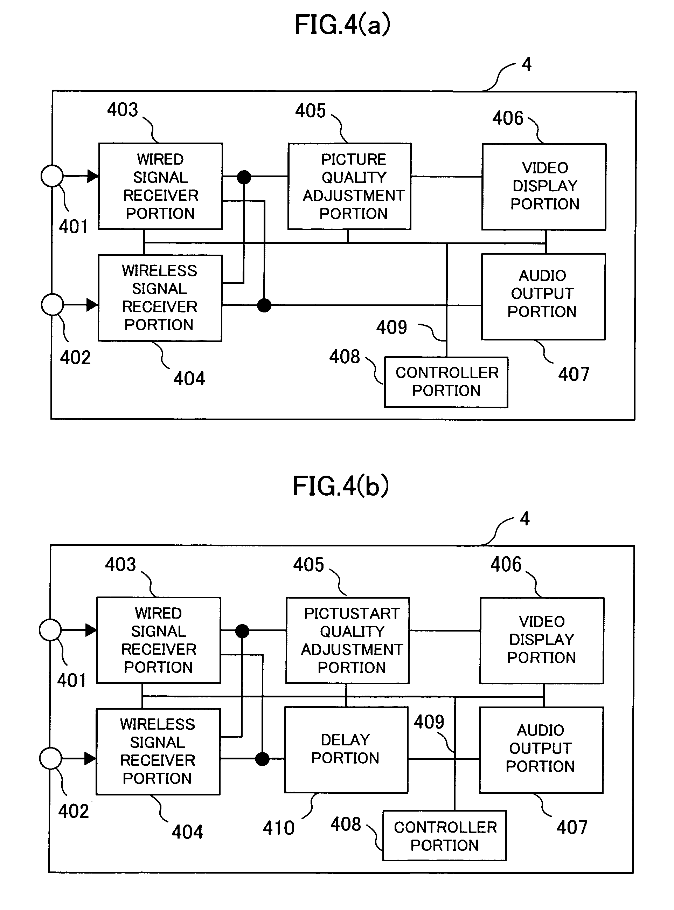

Figs. 4 (a) and 4 (b) show examples of the structures of the display apparatus 4. In particular, Fig. 4(a) shows an example of the structures when correcting or compensating the delay of video processing within the display apparatus, within the display apparatus itself, while Fig. 4(b) shows an example of the case where no correction or compensation is conducted within an inside of the display apparatus.

Reference numerals 401 and 402 depict input terminals. Signals, each being transmitted through the wired connection, are received by means of a wired signal receiver potion 403, and signals, which are transmitted through the radio, are received by means of a wireless signal receiver portion 404. The audio data is transmitted from the receiver portion to a picture quality adjuster portion 405, and the audio signal is transmitted to an audio output portion 407 in the case shown in Fig. 4(a), while it is transmitted to a delay portion 410 in case shown in Fig. 4(b). In the picture quality adjuster portion 405 is conducted a process for adjusting the size of the video inputted fitting to a display format, for example, and a picture is displayed on a panel, such as, a PDP or a LCD, for example, within a video display portion 406. The audio output portion 407 outputs audio through speakers, etc. A controller portion 408 conducts control for each of portions of the display apparatus 4 through a system but 409. A delay portion 410 corrects or compensates an output time depending upon the delay of display control, which is generated within the picture quality adjuster portion 405. On the other hand, in case when the display apparatus shown in Fig. 4(a) is connected with the receiving apparatus 3, an output of the audio data is delayed within the receiver apparatus 3, for compensating the processing time within the picture quality adjuster portion 405.

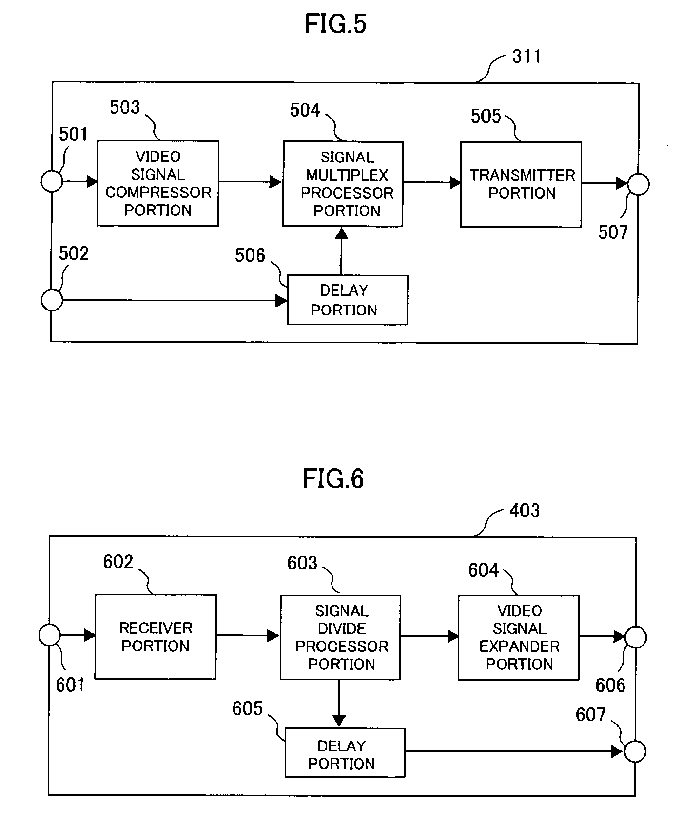

Fig 5 shows an example of the structures of the wired signal transmitter portion 311 shown in Fig. 3, while Fig. 6 an example of the structures of the wired signal receiver portion 403 shown in Figs. 4(a) or (b). Explanation thereof will be made together with a process for transmitting data when those are connected via wires.

A reference numeral 501 depicts an input terminal for the video signal, and 502 an input terminal for the audio signal. The video signal inputted is encoded within a video signal compressor portion 503, for the purpose of reducing the data volume thereof when it is transmitted. For the time of processing within this encoding, the audio data is delayed within a delay portion 506. The video data and the audio data are multiplexed within a signal multiplexing processor portion 504, and are outputted from a transmitter portion 505 to an output terminal 507.

Those data are received, passing through an input terminal 601 of the wired signal receiver portion 403, within a receiver portion. The video data and the audio data, being conducted with the compression process, are divided, within a signal separation or dividing processor portion 603, into the video data and the audio data, and in particular, the video data is decoded within a video signal expander portion 604, thereby to be outputted to an output terminal 606. The audio data is delayed within a delay portion 605, for the time of processing within the video signal expander portion 604.

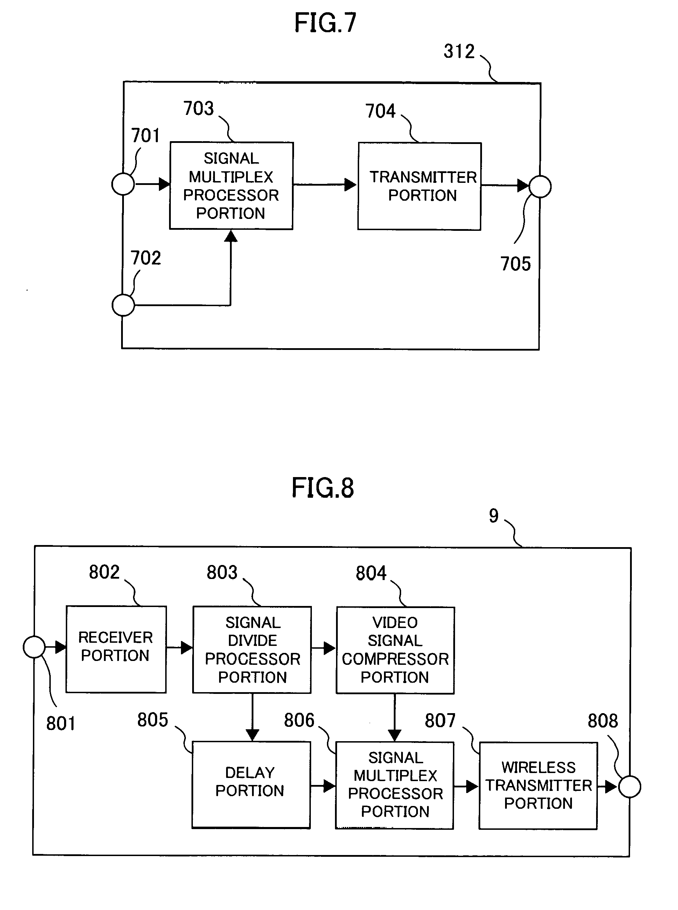

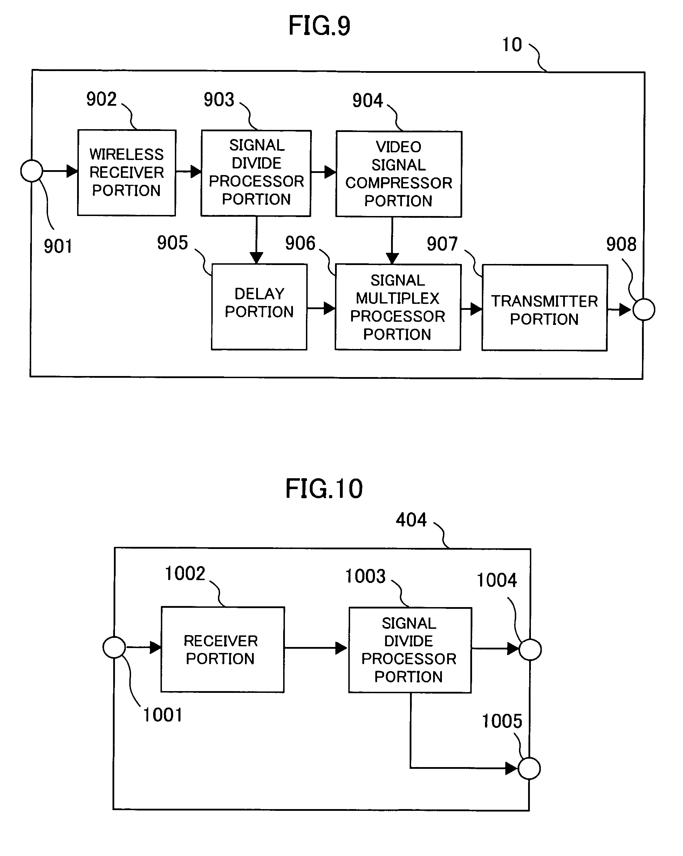

Fig. 7 shows an example of structures of the wireless signal processor portion 312 shown in Fig. 3, Fig. 8 an example of structures of the wireless or radio data transmission unit 9 shown in Fig. 2, and Fig. 10 an example of structures of the wireless signal receiver portion 404 shown in Fig. 4 (a) or 4 (b) . Explanation will be made with the process for data transmission when the wireless or radio data transmission units 9 and 10 are connected through the radio.

A reference numeral 701 depicts an input terminal for the video signal, and 702 an input terminal for the audio signal. Those signals are multiplexed within a signal multiplexing processor portion 703, and a transmitter portion 704 outputs those through an output terminal 705 to the wireless or radio data transmission unit 9. Within the wireless or radio data transmission units 9, the video/audio signal is received by means of a receiver portion 802 through an input terminal 801. For the purpose of reducing the data volume when transmitting it through the radio, the video signal and the audio signal are divided within a signal dividing processor portion 803, and the video signal is encoded within a video signal compressor portion 804. With the audio signal, it is delayed within a delay portion 805, for the time of processing within the video signal compressor portion 804. The video signal compressed and the audio signal passing through the delay portion are multiplexed within a signal multiplexing processor portion 806, and are transmitted from a wireless or radio transmitter unit 807 through an output terminal 808.

Within the wireless or radio transmitter unit 10 on the receiving side, a wireless or radio receiver portion 902 receives the signal through an input terminal 901, and the signal is divided into the video signal and the audio signal within a signal dividing processor portion 903. The video signal is decoded within a video signal expander portion 904, and for the time for this decoding process, it is delayed within a delay portion 905. The video/audio signals are multiplexed within a signal multiplexing processor portion 906, and a transmitter portion 907 transmits the video/audio signals to the display apparatus 4 through an output terminal 908. With the display apparatus 4, in particular, within receiver portion 404, a receiver portion 1002 receives the signals through an input terminal 1001, and within a signal dividing processor portion 1003, the video signal and the audio signal are divided, and they are outputted to an output terminals 1004 and 1005, respectively.

Without providing the delay portion within the wireless or radio transmission unit, but it is possible to conduct the similar delay within the receiving apparatus 3 or the display apparatus 4, in the place thereof.

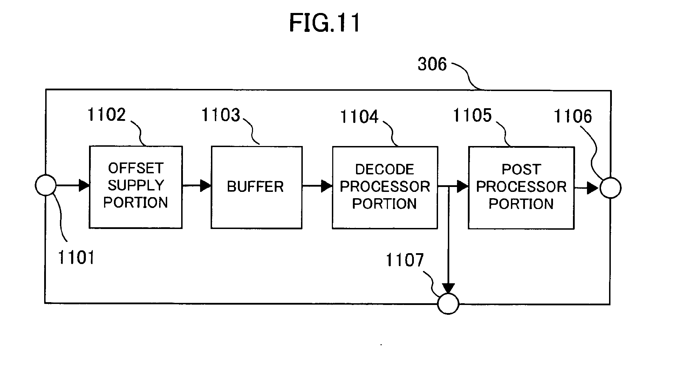

Fig. 11 shows an example of structures of the audio signal processor portion 306 shown in Fig. 3.

When the audio data is inputted from an input terminal 1101, within an offset supply portion 1102 is added an offset, which is designated by the controller portion 320, to PTS (Presentation Time Stamp) . Passing through a buffer 1103 for adjusting a decoding timing, the decode is conducted within a decoding processor portion 1104. Within a post processor portion 1105 are conducted processes, such as, down mixing for changing the audio of 5.1 ch to 2 ch, for example, or muting an audio output, etc. The data is outputted from an output terminal 1106 towards to the speakers of the display apparatus, and an output is made from an output terminal 1107 towards to the audio amplifier.

The decoding processor portion 1104 obtains execution timing of the decoding process by comparing a value of PTS, which is read out from the audio signal and a value of STC (System Time Clock), which the controller portion 320 controls.

However, not by means of the offset supply portion 1102, but it is also possible, within the decoding processor portion 1104, to shift the execution timing of the decoding process by adding an offset to the PTS value or the STC value, which the controller portion 320 reads out, for example.

### <Explanation of Delay>

Next, explanation will be made on the delay.

Within the examples of structures mentioned above, there are two methods for achieving synchronization between the video signal and the audio signal, i.e., a method of delaying by the delay portions 307 and 308 shown in Fig. 3, within an inside of the receiving apparatus 3, and a method of delaying the decoding timing of the audio data through the control upon the offset supply portion 502. With the former method, it is possible to set up a delay influencing upon the data outputted to the display apparatus 4 and the data outputted from the optical output portion 313, respectively, however, for obtaining the delay, there is caused a cost for preparing a memory (not shown in the figure) corresponding to a delay amount, but with the latter method, the delay influences upon any one of the outputs, equally.

With the method for obtaining synchronization between the video output and the optical audio output, it is possible to use the delay portion 308 shown in Fig. 3, in case when converting into PCM through conducting the decoding. On the other hand, the delay portion 308 cannot be used in case when outputting the bit-stream data of MPEG-AAC (Advanced Audio Coding) data format as an input, as it is, without converting (for example, this will be called "AAC output format" or "ES (Elementary Stream) output format", hereinafter).

Herein, if taking the fact that the delay amount is changed depending on the wireless or radio transmitter unit to be used into the consideration, it is difficult to determine the buffer size of the delay portion 307, uniformly. Then, it is effective to determine the buffer volume of the delay portion 307, and also to apply the method for delaying, selectively, within the offset supply portion 502.

A total delay time until outputting the video is caused due to the following factors: (1) the time for processing video data within an inside of the receiving apparatus 3 (i.e., decoding process delay), (2) the time for processing the compression/expansion process of the video signal within the wired signal transmitter portion 311 and the wired signal receiver portion 403 or the wireless or radio transmitter units 9 and 10 (i.e., transmission delay), and (3) the time for processing in the picture quality adjuster portion 405 within an inside of the display apparatus 4 (i.e., display control delay), etc. Those processing delays will be mentioned below.
(1) The delay of time for processing the video signal is determined, i.e., an amount (or a volume)/a ratio/a value, etc. (hereinafter, being called an "amount", collectively) thereof, upon whether the input data to be outputted by the receiving apparatus is a digital broadcast or an analog capture video input from an external recording equipment, for example. In case of the analog capture video input, there is shown a tendency that the delay amount comes to be large, due to the fact that further video processing is conducted in a front stage.
(2) The transmission delay between the wireless or radio transmitter units differs in the amount thereof, depending upon a kind of the unit to be used, and the compression/expansion method thereof, for example. For the purpose of obtaining the delay amount suitable to the wireless or radio transmitter unit, respectively, EDID (Extended Display Identification Data) information of the unit is obtained through a DDC (Display Data Channel), for example, and as a part of the EDID information, the delay amount itself is obtained, to be set up. Or, alternatively, while recording a plural number of names of the units (or, values unique to the equipments, such as, a maker's name, a maker's ID, etc.) and information of the delay amounts suitable for them, in a pair, in advance, into the non-volatile memory 321 within an inside of the receiving 3, the controller portion 320 calculates out the suitable delay amount, by referring to the information recorded within the non-volatile memory 321, when obtaining the name of the unit (or, values unique to the equipments, such as, a maker' s name, a maker's ID, etc.) with the EDID. The similar effect can be obtained, if the location where the information is recorded is, for example, in a built-in recording medium or a portable memory, etc.
   Also, in case where any one of the wireless or radio transmitter unit 9 or 10 applies a plural number of the transmission methods and/or the compression/expansion methods, selectively, it can be considered to notice the transmission delay amount to the receiving apparatus 3 by means of a CEC communication, appropriately. With the above-mentioned, the delay amount suitable to the wireless or radio transmitter unit(s) can be influenced upon the audio delay in the receiving apparatus 3.
(3) With the display control delay, in case of that shown in Fig. 4(a), for example, the transmitter unit 10 obtains the EDID information of the display apparatus 4, while the transmitter unit 9 produces the EDID information to be delivered to the receiving apparatus 3, from the EDID information of the display apparatus 4, which is obtained by the transmitter unit 10, and the EDID information of the transmitter unit 9. The receiving apparatus 3 obtains the EDID information, including the information of the display apparatus 4, from the transmitter unit 9, and it transmits the suitable delay amount to the controller portion 320; thereby, setting up the delay amount, automatically, in the receiving apparatus 3.

Although the explanation was given on the example of using the EDID information through the DDC, herein; however, it is also possible to obtain the EDID information or information similar to the EDID information with using the CEC communication.

Also, in case where the amount of the display control delay is changed also due to the video size to be displayed, with using the CEC, but not using the EDID information, it is possible to optimize the delay amount, always, by transmitting the information from the controller portion 408 to the controller portion 320, every time when the delay amount changes. In this case, for example, if an amount of the display control delay is changed due to alternation of the video size to be displayed, for example, the EDID information of the display apparatus 4 is renewed, and this fact is notified to the transmitter unit 10, from the display apparatus 4 through the DDC. The transmitter unit 10 obtains the EDID information of the display apparatus 4, while the transmitter unit 9 produces the EDID information to be delivered to the receiving apparatus 3, from the EDID information of the display apparatus 4, which is obtained by the transmitter unit 10, and also the EDID information of the transmitter unit 9. The receiving apparatus 3 obtains the EDID information, including the information of the display apparatus 4, from the transmitter unit 9. Within the controller portion 320 is recognized the information of the display control delay, which is transmitted in a predetermined form, and the information of the transmission process delay.

With the factors mentioned above, i.e., a combination of each of the delay amounts, such as, the decoding process delay, the transmission delay, and the display control delay, etc., the controller 320 determines the audio delay amount, which should be set up in the receiving apparatus 3.

Since a case may be considered, i.e., there is a limit of due to the costs or the like, in the memory volume to be prepared for delaying, in particular, for the delay portions 307 and 308, then it is also possible, for the controller portion 320, to make such control upon the audio delay, i. e. , delaying within the offset supply portion 502 when the audio delay amount determined is equal or greater than a certain threshold value, or setting up in the delay portions 307 and 308 when it is less than the threshold value, etc., for example.

The delay portion 506 and 605 are not comprised within the wired signal transmitter portion 311 and the wired signal transmitter portion 403, the processing times within the video signal compressor portion 503 and the video signal expander portion 604 are added to the time of the transmission delay mentioned above, i.e., the wireless or radio transmission process delay.

The delay portion 805 and 905 are not comprised within the wireless or radio signal transmitter portion 9 and the wired signal transmitter portion 10, the processing times within the video signal compressor portion 804 and the video signal expander portion 904 are added to the time of the transmission delay mentioned above, i.e., the wireless or radio transmission process delay.

Also, in case where the optical output format is ES output, the delay amount mentioned above is determined within the offset supply portion 502. In this case, as a result of determining the delay amount by taking the synchronization between the video signal and the optical audio output into the consideration, there are cases, where such synchronization cannot be obtained between the video output and an output from the audio output portion 407. In such case, it can be considered for the controller portion 320 to conduct the audio mute setting within the post processor portion 505, thereby stopping the output of the audio output portion 407, automatically, etc.

On the other hand, in case where the output format is PCM, the setting can be made within the offset supply portion 502 and the delay portion 308, and then, if the setting of the buffer volume is equal to, between the delay portion 307 and the delay portion 308, it is possible to achieve the synchronization between the outputs in the audio output portion 207 and the audio amplifier.

With the above-mentioned, it is possible to select the method for delaying the audio between that of using the delay portions and that of supplying the offset, so as to enable adjustment of the synchronization between the video and the audio, automatically, and therefore, for the user, it is not necessary to make the adjustment from the beginning. Also, it is also possible to establish the synchronization, with respect to the shift of synchronization between the video and the audio, which are generated due to the factors other than the transmission rate of video.

### <Explanation of Processes>

Explanation will be given on an example of processing, for conducting the automatic setting of delay mentioned above, within the example of structures mentioned above.

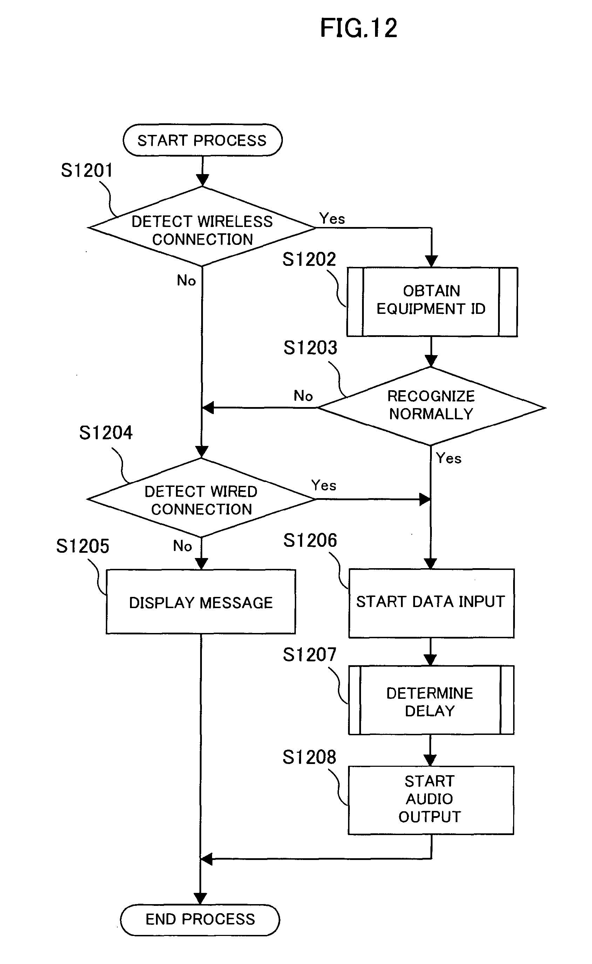

Fig. 12 shows an example of setting process of the delay amount within an initializing process.

In a step (hereinafter, it is abbreviated by "S") 1201, detection is made on whether the wireless or radio transmitter unit is connected or not. When detecting it, normally, the process advances into S1202, and if the connection is not detected to be normal, the process advances into S1204. In S1202, an equipment ID is obtained for the wireless or radio transmitter unit, which is detected. With an aid of this equipment ID, determination is made on the wireless or radio transmission delay amount. In S1203, if acknowledgement is made, normally, then the process advances into S1206, while into S1204 if the acknowledgement is failed. In S1204, detection is made on the wired connection, and if it can be detected normally, the process advances into S1205. In S1205, since the connection cannot be established between the receiving apparatus 3 and the display apparatus 4, then the process is completed while displaying a message, such as, prompting the user to confirm the connection condition, for example, with setting a time-out on the display apparatus 4, for example.

Since the connection can be established in S1206, the video/audio data are inputted. On this stage, it is possible to obtain all of parameters, such as, the size of display screen, the optical output setting, etc. , for determining the audio delay amount. During the processing up to S1206 mentioned above, all elements come out, fully, for establishing the delay amount mentioned above. In S1207, setup of the delay amount is made, and the process advances into S1208. In S1208, the audio decoding is started, and the audio output is conducted by releasing the audio output muting, thereby completing the process.

Though the embodiment mentioned above is the example of taking priority on the wireless or radio connection when both the wired connection and the wireless or radio connection are effective, but on the contrary thereto, it is also possible to take the priority on the wired connection. Also, the method for transmitting the data from the receiving apparatus 3 to the display apparatus 4 may be selectable by the user, for example, from a setup menu, etc. , thereby to take the priority on the connection method selected, or to use the only the connection method selected.

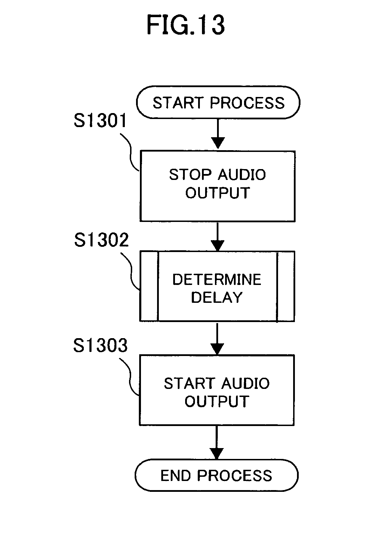

Fig. 13 shows an example of processing for changing the delay setting, by adjusting the delay time, finely, for the user, from an operation menu, etc., for example.

In S1301, setup of the audio output muting and stop of the decoding process are conducted, and the audio output is stopped. In this time, in S1302, setup of delay is conducted, similar to S1207. In S1303, start of the decoding process and releasing of the audio output muting are conducted, and the audio output is restarted, thereby completing the process.

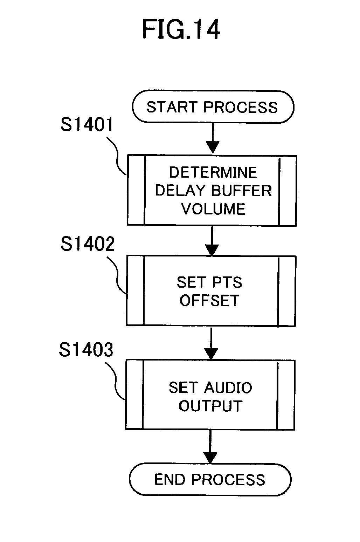

Fig. 14 shows the detailed example of the delay setting in S1207 and S1302.

In S1401, setups of the delay portions 307 and 308 are conducted depending on the necessity thereof, and the process advances into S1402. In S1402, setup of the offset supply portion 1102 is conducted depending on the necessity thereof, and the process advances into S1403. In S1403, setup of the speakers is conducted, and thereby completing the process.

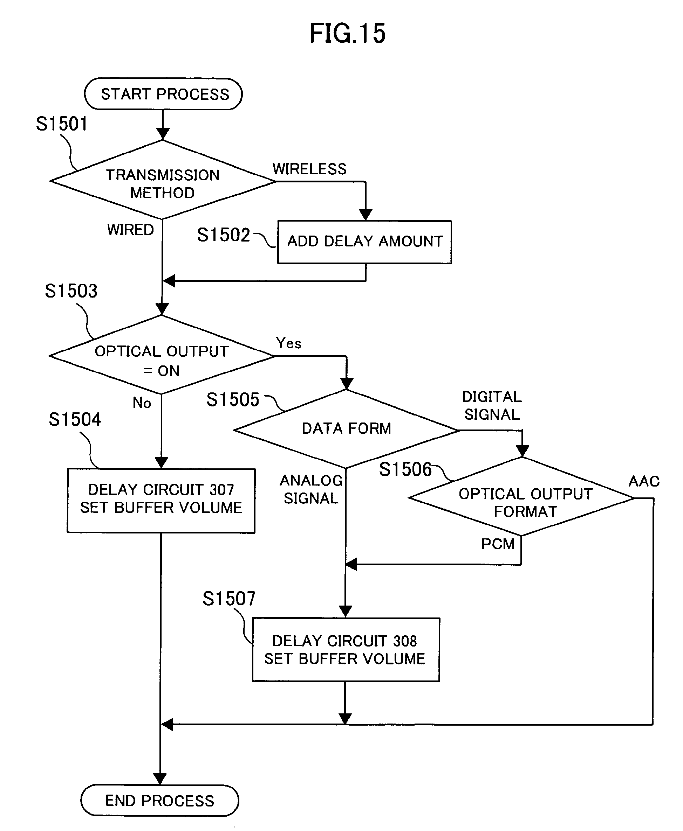

Fig. 15 shows an example of the detailed process in S1401, i.e., an example of process for determining the delay buffer volumes of the delay portions 307 and 308.

In S1501, if the data transmission method between the receiving apparatus 3 and the display apparatus 4 is the wireless one, the process advances into S1502, while into S1503 if it is wired. In S1502, the processing time within the wireless or radio transmission method is added to the delay amount. In S1503, if the optical output of the audio signal is effective, then the process advances into S1505, while into S1504 when ineffective. The user may make the setup on effective/ineffective of the optical output, with using a menu, for example. In S1504, setup is made on the delay time (i.e., the buffer volume) of the delay portion 307, which is connected with the display apparatus 4, and thereby completing the process. A value to be set up is a total sum, which can be calculated from the delay time in each of the processor portions, uptothevideooutput. In S1505, if the data formoutputted from the receiving apparatus 3 is a digital signal, such as, the capture data, etc. , from an external equipment, for example, then the process advances into S1506, on the other hand, the process advances into S1507 if it is that obtained through digital conversion of the analog signal, such as, the capture data or the like, from an external equipment, for example. In S1506, if the data format of the optical output of the audio signal is ACC output format, since the delay portion 308 is ineffective, then the process is completed, while into S1507 if it is the PCM output format. In S1507, the delay time (i.e., the buffer volume) is set up, for the delay portion 308, which comes to be effective when it is PCM output format, and thereby completing the process.

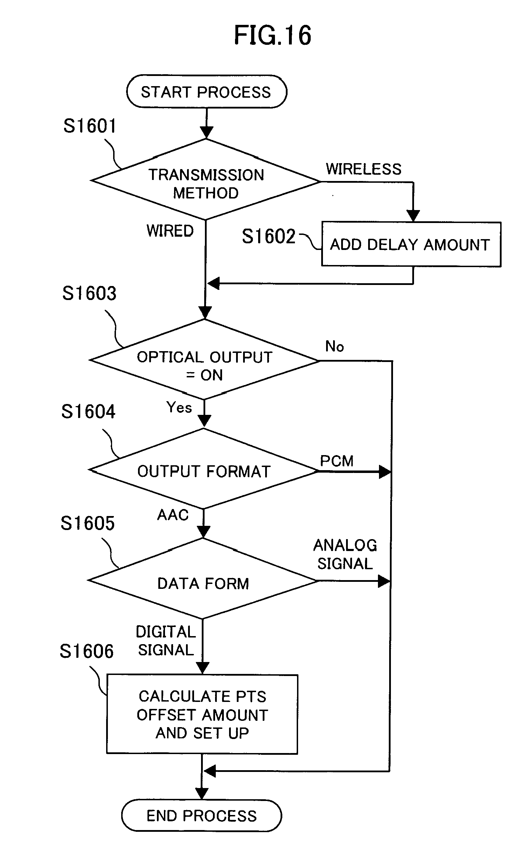

Fig. 16 shows an example of the detailed process in S1402, i.e., the process for determining the offset volume within the offset supply portion 1102.

In S1601, if the data transmission method between the receiving apparatus 3 and the display apparatus 4 is wireless or radio one, the process advances into S1602, while advances into S1603 if it is wired. In S1602, the processing time within the wireless or radio transmission method is added to the delay amount. In S1603, if the optical output of the audio signal is effective, then the process advances into S1604, while the process is completed if it is ineffective. In S1604, if the data format of the optical output of the audio signal is ACC, the process advances into S1605, while the process is completed if it is PCM. In S1605, if the data form to be outputted from the receiving apparatus 3 is the digital signal, the process advances into S1606, while the process is completed if it is one obtained through digital converting of the analog signal. In S1606, the controller portion 320 calculates out the offset value to be added to PST, from the video signal processing time in each of the processor portions, and set it into the offset supply portion 1102, thereby completing the process.

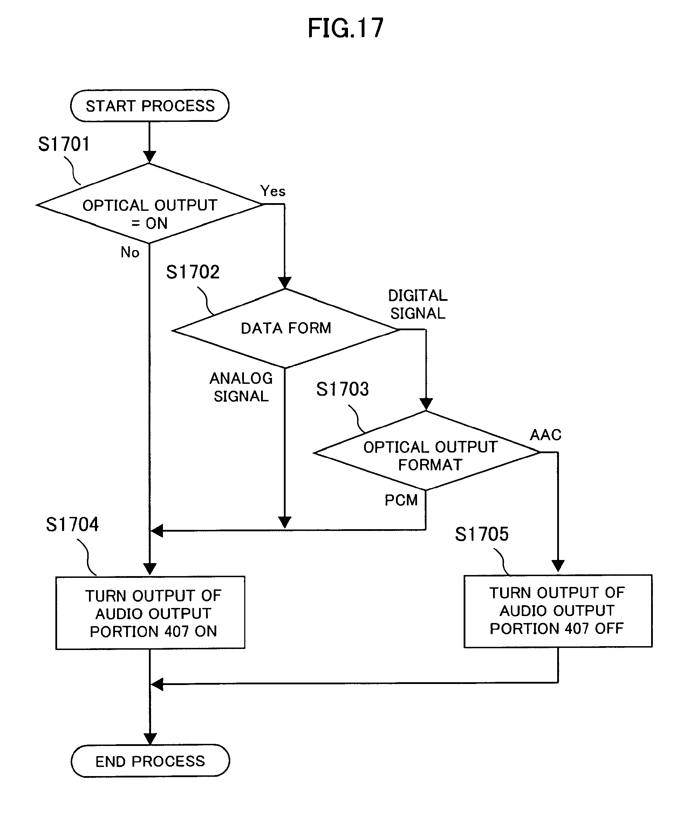

Fig. 17 shows an example of the detailed process in S1403, i.e. , an example of process for setting up an output from the audio output portion 407.

In S1701, if the optical output is effective, then the process advances into S1702, while advances into S1704 if it is ineffective. In S1702, if the format of the data to be outputted from the receiving apparatus 3 is the digital signal, the process advances into S1703, while advances into S1704 if it is one obtained through digital conversion of the analog signal. In S1703, if the data format of the optical output of the audio signal is AAC, the process advances into S1705, while advances into S1704 if it is PCM. In S1704, the process is completed, by brining the output setup of the audio output portion 407 effective. In S1705, the process is completed, by brining the output setup of the audio output portion 407 into ineffective.

However, though the explanation was given on the example of the process, for changing the output at the audio output portion 407, automatically, but it is also possible to bring the output of the audio output portion 407 to be always effective, so that the user uses the soundmuting function, appropriately, for example, and thereby deleting the process for setting the audio output in S1403.

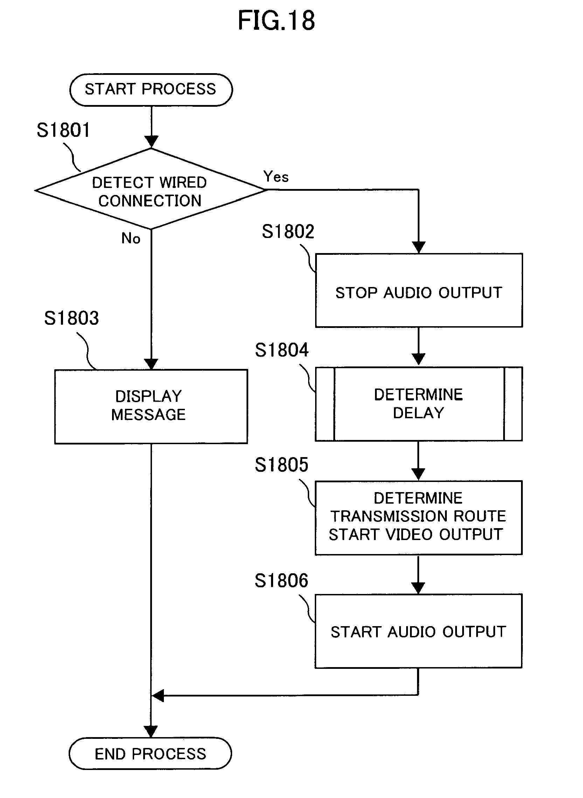

Fig. 18 shows an example of process for maintaining the synchronization between the video and audio outputs when the wireless or radio connection is cut off, due to any kind of reasons, during when using the receiving apparatus 3 and the display apparatus 4 with connecting them through the radio.

In S1801, detection is made on whether the wireless or radio connection is effective or not, and if it is effective, the process advances into S1803, while advances into S1802 if it is ineffective. In S1802, the controller portion 408 of the display apparatus detects on that no wired nor wireless connection is made, and it completes the process while displaying a message of prompting the user to confirm the connection, on the video display portion 406.

In S1803, the controller portion 320 conducts the process for setting the audio output muting and for stopping the audio decoding, thereby to stop the audio output, and then the process advances into S1804. In S1804, the controller 320 conducts the audio delay mentioned above. In S1805, the controller portion 320 exchanges the connection route by means of the switches 309 and 310 to the wired signal transmitter portion 311, thereby to restart the output of the video signal, and the process advances into S1806. In S1806, the controller portion 320 starts the audio output, and thereby completing the process.

With the example of process shown in Fig. 18, it is possible to determine the audio delay, which is appropriate when the wireless or radio transmission is broken, and also to maintain the synchronization between the video/audio outputs, thereby to restart the display. However, the stoppage of the audio output shown in S1802 may be achieved by bringing the output of the audio output portion 407 to be ineffective through the controller 408, which detects the breakage of the wireless or radio connection, autonomously. Also, this processing step is also same when the user exchanges the transmission method to the wireless or radio, for example, from the setup menu.

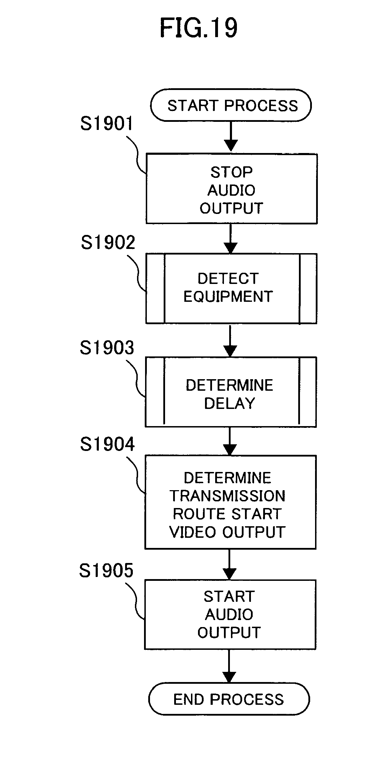

Fig. 19 shows an example of process for maintaining the synchronization between the video/audio outputs, when making the wireless or radio connection during when the user puts the receiving apparatus 3 and the display apparatus 4 to use with establishing the wired connection therebetween.

In S1901, the controller portion 320 conducts the processes for setting the audio output muting and for stopping the audio decoding, thereby to stop the audio output, and the process advances into S1902. In S1902, the controller portion 320 detects the equipment ID of the wireless or radio transmission detected, and thereby obtaining the processing time necessary for the wireless or radio transmission. In S1903, the controller portion 320 conducts the setup of the audio delay mentioned above, and the process advances into S1904. In S1904, the controller portion 320 exchange the connection route to the wireless or radio signal transmitter portion 312 by means of the switches 309 and 310, thereby to restart the output of video signal, and the process advances into S1905. In S1905, the audio output is started, similar to S1806, and thereby completing the process.

With the example of process shown in Fig. 19, it is possible to determine the audio delay, appropriately, when exchanging to the wireless or radio transmission, thereby to restart the display with maintaining the synchronization between the video/audio outputs. However, the stoppage of the audio output shown in S1802 may be achieved by bringing the output of the audio output portion 407 to be ineffective through the controller 408, which detects the breakage of the wireless or radio connection, autonomously. Also, this processing step is also same when the user exchanges the transmission method to the wireless or radio, for example, from the setup menu.

### <Explanation of Screen Display>

Explanation will be made on the screen displayed by the example of process mentioned above.

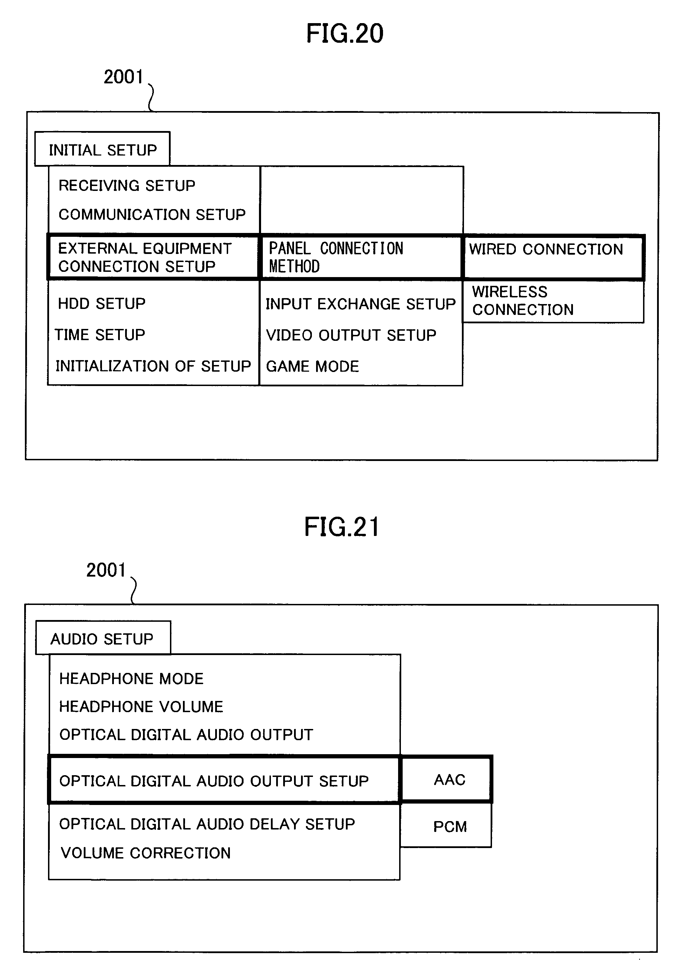

Fig. 20 shows an example of display of a menu for the user to select the connection method between the receiving apparatus 3 and the display apparatus 4. A reference numeral 2001 shows a video display portion of the display apparatus 4. The user is able to select a desirable connection form from an item of "Panel Connection Method", with using the remote controller or the operation portion 319. When the user selects "Wired Connection", the controller 320 conducts the setup of the wired connection for the audio delay amount. When the user selects "Wireless Connection", the controller 320 conducts the setup of the wireless connection for the audio delay amount.

Fig. 21 shows an example of display of the menu for the user to select the data form of the optical output. The user is able to select a desirable connection form, for the optical output of the audio signal, with using the remote controller or the operation portion 319. When the user selects "AAC", the optical audio output is outputted, but without processing the input audio signal, and when the user selects "PCM", the input audio signal is outputted with conducting pulse-coding modulation thereon. However, since the AAC output cannot be done depending on the input signal, then it is possible to change the item "Optical Digital Audio Output Setup" itself to be non-selectable, by applying a gray-out or shading thereon.

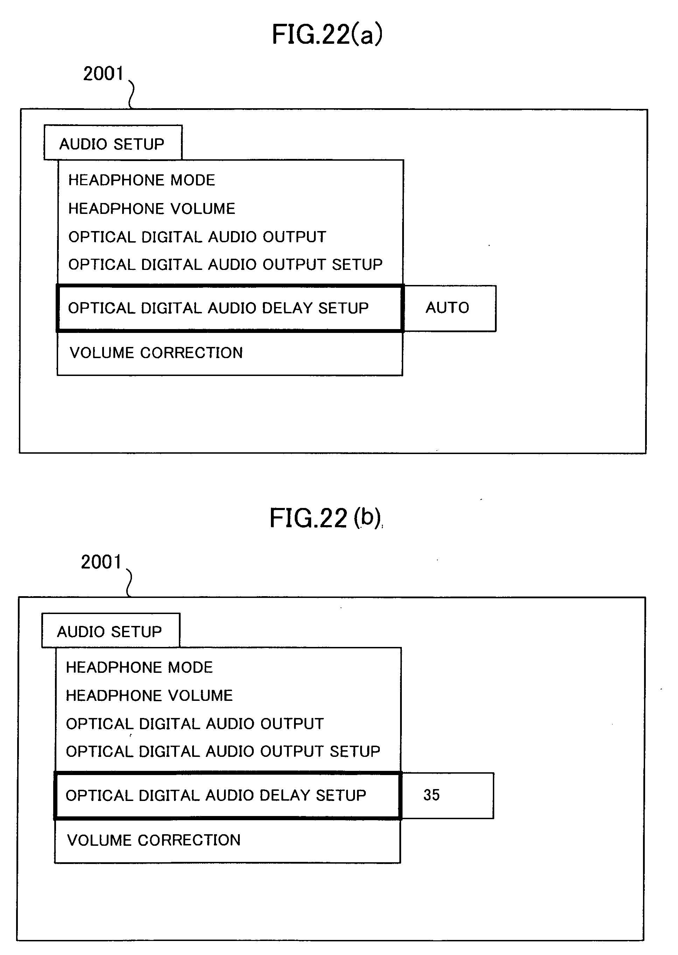

Figs. 22 (a) and 22 (b) show an example of display of a menu, which is used, for the user, to finely adjust the delay amounts of the delay portions 307 and 308. The user is able to finely adjust increase/decrease of the audio delay amount with using the remote controller or the operation portion 319, for example, by a millisecond unit, thereby to determine the synchronization between the video/audio outputs at desire. Fig. 22 (a) shows the case when the user designates "Auto" for using the receiving apparatus 3 under the condition of the delay amount, which is set up automatically. Fig. 22 (b) shows the case when the user designates so as to add the delay of 35 milliseconds onto the delay amount, which the receiving apparatus 3 determines automatically. It is possible to operate the setup delay amount, from this 35 millisecond, by a unit of 1 millisecond, for example, through pushing an up- or down-operation button of the remote controller.

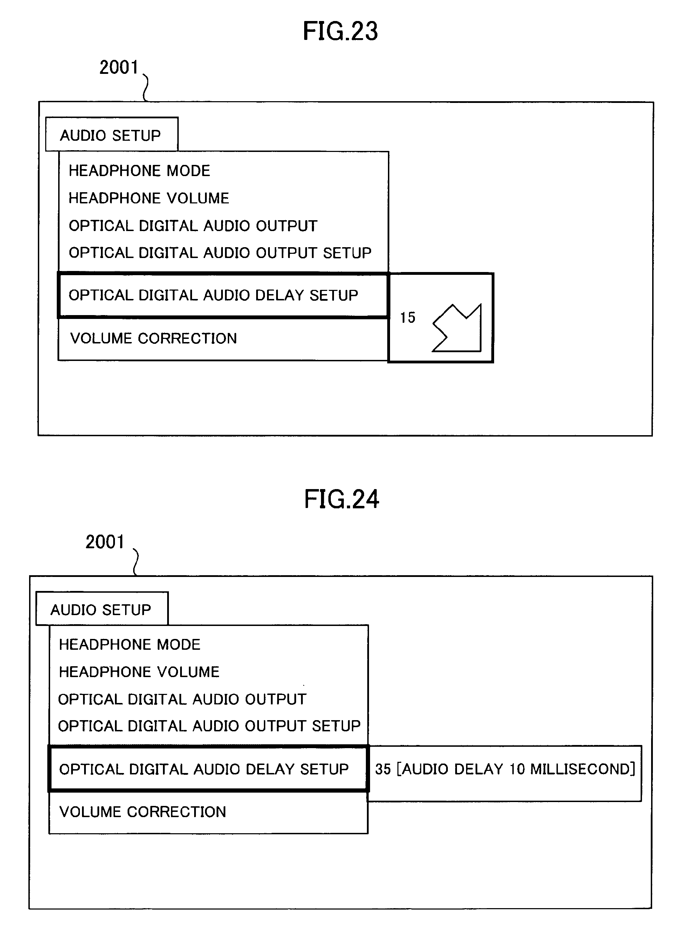

Also, when the user select one other than "Auto", within the controller portion 320, it is possible to give guidance for the user, which one is better to increase or decrease, for adjusting the delay amount, which should be adjusted finely, and from the video processing time and the audio delay amount. There are various method for that, for example, a method of giving guidance with using an arrow, as is shown in Fig. 23, or a method of giving the guidance by means of a character line, as is shown in Fig. 24, etc.

Also, it is possible tomake the audio delay amount recordable, which the user determines to be suitable depending on the condition of the connection method, in the non-volatile memory 321, for example, so that the user can select it, easily, thereafter, with using choices, "User Setup 1", "User Setup 2", etc., as the setup items for finely adjusting the delay amount mentioned above.

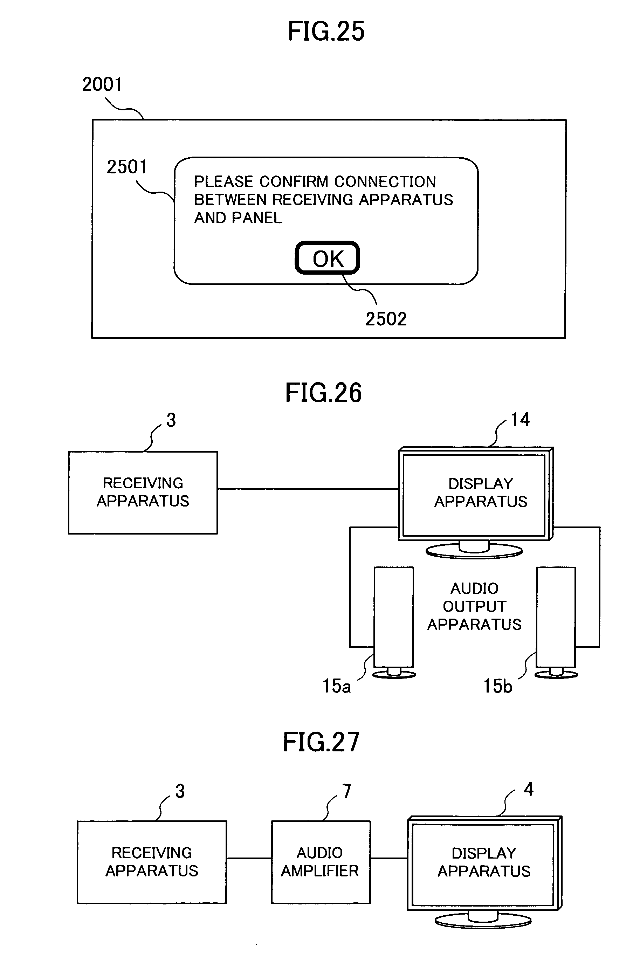

Fig. 25 shows an example of display for displaying the message on the display apparatus 4 in S1205 or S1803, in case when the connection cannot be established normally between the receiving apparatus 3 and the display apparatus 4. A reference numeral 2501 depicts the message for prompting the user to make confirmation upon the connection. A reference numeral 2502 depicts a button, which the user selects. When it is selected, then the controller portion erases the message displayed. The message may be erased, automatically, after being displayed for a predetermined time, but without provision of the button.

### <Example 2>

Consideration is paid on a case where the video and the audio differs from in the transmission time on the data transmission between the receiving apparatus 3 and the display apparatus 4, but without provision of the delay portions 506 and 605, or 805 and 905. Also, in this case, if time difference is determined, uniquely, in advance, depending on the transmission unit, then the controller portion 320 makes the correction or compensation thereof within the delay portion 307 or the offset supply portion 1102. A method, for example, for obtaining that transmission time difference, automatically, will be shown below.

Within the wireless or radio signal transmitter portion 312, a time stamp is added onto the data of video and audio, which will be transmitted at a predetermined timing. Within the wireless or radio signal receiver portion 404, the value of the time stamp added is obtained, and the difference thereof is calculated within the controller portion 408. It is possible to achieve the correction or compensation, by setting the time difference to the delay portion 410, which is calculated in the case shown in Fig. 4(b), or transmitting the time difference calculated to the controller portion 320, so as to make the correction of compensation within the delay portion or the offset supply portion 1102.

### <Example 3>

In the embodiment 1, though the explanation was given on the method for delaying the audio output, however it is also possible to adjust or shift the timing of the decoding process of the video data front and back, by applying the offset to PTS. For example, when the audio, which is optically outputted, is delayed at the output, i.e., within the audio amplifier 7 at the destination of the output, it is possible to obtain the synchronization by setting an appropriate offset to PTS.

### <Example 4>

In the embodiment 1, though the video data and the audio data are outputted on the output (or display) apparatus 4 in the structures thereof, however consideration will be paid on a case, for example, where a video output apparatus and an audio output apparatus are provided, separately. The reproducing apparatus 3 obtains a display control delay time of the audio data from an audio output apparatus, in the similar manner for obtaining the display control delay time from the video output apparatus. The controller portion 320 calculates the delay time by subtracting the process delay time necessary for the audio output from the process delay time necessary for the video output. With this, it is possible to obtain the synchronization, in the similar manner to that in the embodiment 1. The connections to those may be any one of the followings: i.e., a combination of the wired and the wireless, both the wireless, and both the wired.

### <Example 5>

In the embodiment 1, though the video data and the audio data are outputted on the output (or display) apparatus 4 in the structures thereof, however consideration will be paid on a case, for example, where the video output apparatus and the audio output apparatus are connected with the reproducing apparatus, in series.

Fig. 26 shows an outline, in particular, when connecting the reproducing apparatus 3 and the video display apparatus 14, and the video display apparatus 14 and the audio output apparatuses 15a and 15b, respectively. The connections are made with using a method for enabling transmission of the video/audio data, and for enabling transmission of easy instruction or command code thereon, such as, the HDMI cable, for example. The reproducing apparatus 3 obtains the display control delay time of the audio data from the audio output apparatuses 15a and 15b, in the similar manner for obtaining the video display control delay time from the video display apparatus 14. The audio output apparatuses 15a and 15b should be considered to be same in the structures thereof, so as to obtain a stereo audio output, for example. Therefore, it is considered that the output delay times mentioned above are equal to. The controller portion 320 calculates the delay time by subtracting the process delay time necessary for the audio output from the video display control delay time. If there is no display control delay of the audio data, within the audio output apparatuses 15a and 15b, no such output delay time mentioned above is obtained; they may be processed in the similar manner to that of the embodiment 1. In case where the wireless or radio connection is established among the apparatuses, it is enough to calculate out the delay time, further adding the transmission process delay time thereto.

Also, Fig. 27 shows a case where the reproducing apparatus 3 and the display apparatus 4 are connected through the audio amplifier 7. The connections are made with using a method for enabling transmission of the video/audio data, and for enabling transmission of easy instruction or command code thereon, such as, the HDMI cable, for example. In this case, the reproducing apparatus 3 also obtains the display control delay time of the audio data from the display apparatus 4, and the output delay time of the audio data from the audio amplifier 7. The controller portion 320 calculates the delay time by subtracting the output delay time of the audio data from the video display control delay time. In case where there is no such display control delay of the audio data within the audio amplifier 7, they may be processed in the similar manner to that of the embodiment 1, but without obtaining the output delay time mentioned above.

As the process, for obtaining the information of the display control delay time of the audio data and the video display control delay time, can be listed up the following examples. In Fig. 27, initially the reproducing apparatus 3 inquires the process delay time to the audio amplifier 7, for example, through CEC communication. The audio amplifier 7 inquires the process delay time to the display apparatus 4 through CEC communication, and the display apparatus 4 informs the video display control delay time to the audio amplifier 7. The audio amplifier 7 combines the information of the display control delay time of the audio data of itself and the information of the video display control delay time, which is obtained from the display apparatus 4, in a predetermined form, and transmits themtothe reproducing apparatus 3. The reproducing apparatus 3 determine a setup value of the audio delay amount from the process delay times of the two equipments. In this time, the display apparatus 4 can send, not only the video display control delay time, but also the output delay time of the audio data. In such the case, the reproducing apparatus 3 obtains the output delay time of the audio data of the display apparatus from the audio amplifier 7, and therefore is able to change the audio delay amount to be set up, depending on from which one the audio output is conducted, i.e., the audio amplifier 7 or the display apparatus.

Also, in other example, firstly the audio amplifier 7 inquires the process delay amount to the display apparatus 4. The display apparatus 4 inform the information of the video display control delay time (or, the information combining it and the information of the output delay time of the audio data, in a predetermined format) to the audio amplifier 7. The audio amplifier 7 records the information obtained into an internal memory. Next, when the reproducing apparatus 3 inquires the delay amount to the audio amplifier 7, the audio amplifier 7 combines the information of the display control delay time of the audio data of itself and the information of the video display control delay time, which is obtained from the display apparatus 4 (and the display control delay time of the audio data), in a predetermined format, and send them to the reproducing apparatus 3. From the information obtained, the reproducing apparatus 3 determines the setup value of the audio delay amount.

Also, in other embodiment, the information of the video display control delay time (or, the information combining it with the information of the display control delay time display control delay time of the audio data, in a predetermined format) is informed from the display apparatus 4 to the audio amplifier 7, and the audio amplifier 7 transmits the information of the display control delay time of the audio data of itself and the video display control delay time obtained from the display apparatus 4 (and the display control delay time of the audio data), to the reproducing apparatus 3, combining them in a predetermined format. From the information obtained, the reproducing apparatus 3 determines the setup value of the audio delay amount.

As was mentioned above, the reproducing apparatus 3 is able to obtain the information of the audio amplifier 7 and the display apparatus 4, in various patterns, and thereby to determine the audio delay amount. Other than the examples given, similar or analogous methods can be considered. Also, in Fig. 26, the reproducing apparatus 3 is able to obtain the video display control delay time of the video display apparatus 14 and the display control delay time of the audio data of the audio output apparatuses 15a and 15b, thereby to determine the audio delay amount. From the above, in those embodiments, it is possible to obtain the synchronization between the video output and the audio output, in the similar manner to that of the embodiment 1. The connections to those may be any one of the followings: i.e., a combination of the wired and the wireless, both the wireless, and both the wired.

### <Embodiment 6>

In combining with the embodiments mentioned above, for example, also in case where the receiving apparatus 3 receives the video/audio data from the user's distributor server at home, through the connection established by means of the wireless or radio transmitter unit, and there is generated timing shift or difference between the video data and the audio data, it is possible to obtain the synchronization between the video output and the audio output, in the similar manner to that of the example 1, by obtaining the transmission process delay time through the wireless or radio transmitter unit, so as to determine the audio delay amount within the controller portion 320.

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications that fall within the ambit of the appended claims, as interpreted by the description and drawings.

## Claims

1. A video/audio reproducing apparatus, to be connected via a first apparatus with a second apparatus, comprising:
a first receiving portion, which is configured to receive video data, audio data, and a first reproduction synchronization information for reproduction synchronization between the video data and the audio data;
a second receiving portion, which is configured to receive second reproduction synchronization information for reproduction synchronization between the video data and the audio data from said first apparatus; and
a controlling portion, which is configured to reproduce the video data and the audio data received by said first receiving portion, upon basis of the first reproduction synchronization information and the second reproduction synchronization information, which are received by said first receiving portion and said second receiving portion.

2. The video/audio reproducing apparatus, as described in the claim 1, wherein
said first reproduction synchronization information is time information, which is included in received data, and
said second reproduction synchronization information includes data process time information within said first apparatus and data process time information within said second apparatus.

3. The video/audio reproducing apparatus, as described in the claim 1, wherein
said first reproduction synchronization information is time information, which is included in received data, and
said second reproduction synchronization information is based on data process time information within said first apparatus and data process time information within said second apparatus.

4. A video/audio reproducing apparatus, to be connected with a video/audio outputting apparatus through a network, comprising:
a first receiver portion, which is configured to receive video data, audio data, and a first reproduction synchronization information for use of reproduction synchronization between the video data and the audio data;
a second receiver portion, which is configured to receive a second reproduction synchronization information for use of reproduction synchronization between the video data and the audio data, from said video/audio outputting apparatus; and
a controller portion, which is configured to reproduce the video data and the audio data received by said first receiver portion upon basis of the first and second reproduction synchronization information, which are received by said first receiver portion and said second receiver portion.

5. The video/audio reproducing apparatus, as described in the claim 4, wherein
said first reproduction synchronization information is time information included within received data, and
said second reproduction synchronization information is time information of data processing within said video/audio outputting apparatus.

6. The video/audio reproducing apparatus, as described in the claim 4, wherein
said controller portion changes a delay amount of the audio data upon basis of said second reproduction synchronization information.

7. The video/audio reproducing apparatus, as described in the claim 6, wherein
said controller portion changes said delay amount depending on whether said audio/video outputting apparatus is connected through a wireless circuit or a wired circuit.

8. A video/audio reproducing method, comprising the following steps of:
receiving video data and audio data, and a first reproduction synchronization data for reproduction synchronization between said video data and said audio data;
receiving a second reproduction synchronization data for obtaining reproduction synchronization between the video data and the audio data within said video/audio outputting apparatus, from the video/audio outputting apparatus by a relaying apparatus;
producing a third reproduction synchronization data for achieving reproduction synchronization between the video data and the audio data when outputting them from the relaying apparatus, and also a fourth reproduction synchronization information upon basis of said second reproduction synchronization information; and
receiving said fourth reproduction synchronization information by said video/audio reproducing apparatus.

9. The video/audio reproducing method, as described in the claim 8, wherein
said reproduction synchronization information is time information included within received data,
said second reproduction synchronization information is time information of data processing within a video/audio outputting apparatus,
said third reproduction synchronization information is time information of data processing within a relaying apparatus, and
said fourth reproduction synchronization information is information enumerating the time information of data processing within the video/audio outputting apparatus, and the time information of data processing within the video/audio outputting apparatus.

10. A video/audio reproducing apparatus, to be connected with a video outputting apparatus and an audio outputting apparatus through a network, comprising:
a first receiver portion, which is configured to receive video data, audio data, and a first reproduction synchronization information for use of reproduction synchronization between the video data and the audio data;
a second receiver portion, which is configured to receive a second reproduction synchronization information for use of reproduction synchronization between the video data and the audio data, from said video/audio outputting apparatus; and
a controller portion, which is configured to reproduce the video data and the audio data received by said first receiver portion upon basis of the first and second reproduction synchronization information, which are received by said first receiver portion and said second receiver portion.

11. The video/audio reproducing apparatus, as described in the claim 10, wherein
said reproduction synchronization information is time information included within received data, and
said second reproduction synchronization information is time information of data processing within the audio outputting apparatus.
